Europäisches Patentamt

European Patent Office

Office européen des brevets

(11) Publication number: **0 297 073**
**A1**

(12) **EUROPEAN PATENT APPLICATION**

(21) Application number: **88850225.9**

(22) Date of filing: **22.06.88**

(51) Int. Cl.⁴: **B 62 D 33/02**

(30) Priority: **26.06.87 SE 8702660**

(43) Date of publication of application:
**28.12.88 Bulletin 88/52**

(84) Designated Contracting States: **AT BE DE GB NL**

(71) Applicant: **GISEBO VAGNINDUSTRIE AB
Industrigatan 16
S-552 71 Jonkoping (SE)**

(72) Inventor: **Sers, Ove
Igelkottsvägen 3
S-552 71 Jönköping (SE)**

(74) Representative: **Jörneld, Bo et al
L.A. Groth & Co AB Västmannagatan 43
S-113 25 Stockholm (SE)**

(54) **Trailer corner post.**

(57) For dismantlable fitting of a forward or rear crossbeam (B) and a side board (F) arranged at right angles thereto for a trailer, a corner post (1) is formed with two chambers situated one above the other. The corner post has a five-sided (4, 5, 6, 8, 9) cross sectional configuration where an opening (10) to the upper chamber is formed between two parallel sides (8, 9) while the bottom side (5) of the upper chamber simultaneously together with a side (4) parallel to it defines the opening to the lower chamber. The lower chamber is intended for the forward or rear crossbeam, while the side board is thrust into the upper chamber for resting against the upper side of the forward or rear crossbeam in a fitted state.

Fig. 2

EP 0 297 073 A1

**Description**

## TRAILER CORNER POST

### Technical Field

The present invention relates to a corner post for trailers with dismantlable fitting of a forward or rear crossbeam and of a side board.

### Background Art

In trailers for motor vehicles, the fitting of respective forward and rear crossbeams and side boards has been carried out such as to be anything from a fixed welded structure to a bolted joint. Particularly with the utilisation of bolted joints, corner posts such as those described in the Swedish patent application 85 06156-2 are used. It is an advantage to be able to use such removably fitted crossbeam and side board structures, since the individual details can be stored in a prefabricated state and ready surface treated, e.g. from the aspect of rustproofing. There are also other advantages, such as the opportunity of easy exchange of different details for adjusting the load capacity of the trailer, or because details have been damaged.

Corner post structures known up to now for the dismantlable fitting of beams and side boards have been made from two or more post parts, as will be seen from the above-mentioned patent application, or by a simple implementation using steel angle sections, with resulting instability of the ready-erected trailer and a troublesome fitting procedure for the erector, whether or not he is an experienced person skilled in the art or the private owner of the trailer.

### Disclosure of invention

One object of the present invention is to provide a corner post for trailers which gives a stable but also dismantlable fitting of respective forward and rear crossbeams as well as side boards, so that the above mentioned advantages with dismantlable fitting can be retained. Another object is that fitting shall be simple and capable of being carried out by a single operator.

These objects are achieved by the corner post in accordance with the present invention. The distinguishing features catering for this are as follows. The corner post has two chambers situated one above the other in the axial direction of the corner post, these chambers having openings which are at right angles to each other. The lower chamber is arranged to receive the forward or rear crossbeam, while the side board of the trailer is accommodated in the upper chamber of the post, such as to rest on the forward or rear crossbeam.

By the corner post thus having two well-defined chambers there is obtained positive guide means and stable mounting means for the parts fitted into the chambers. The guidance provided makes it possible for an operator readily to fit the forward or rear crossbeam, which is first inserted in the lower chamber, and thereafter the side board by lowering it into the second chamber.

### Preferred embodiment

The corner post in accordance with the present invention will now be described in more detail below and with reference to the accompanying drawing, which illustrates a preferred embodiment of the corner post, and where

Figure 1 illustrates the corner post in perspective seen towards the rear crossbeam opening and

Figure 2 is a similar perspective depiction of the corner post seen towards the opening for the side board and with the crossbeam and side board indicated in their fitted positions by chain dotted lines.

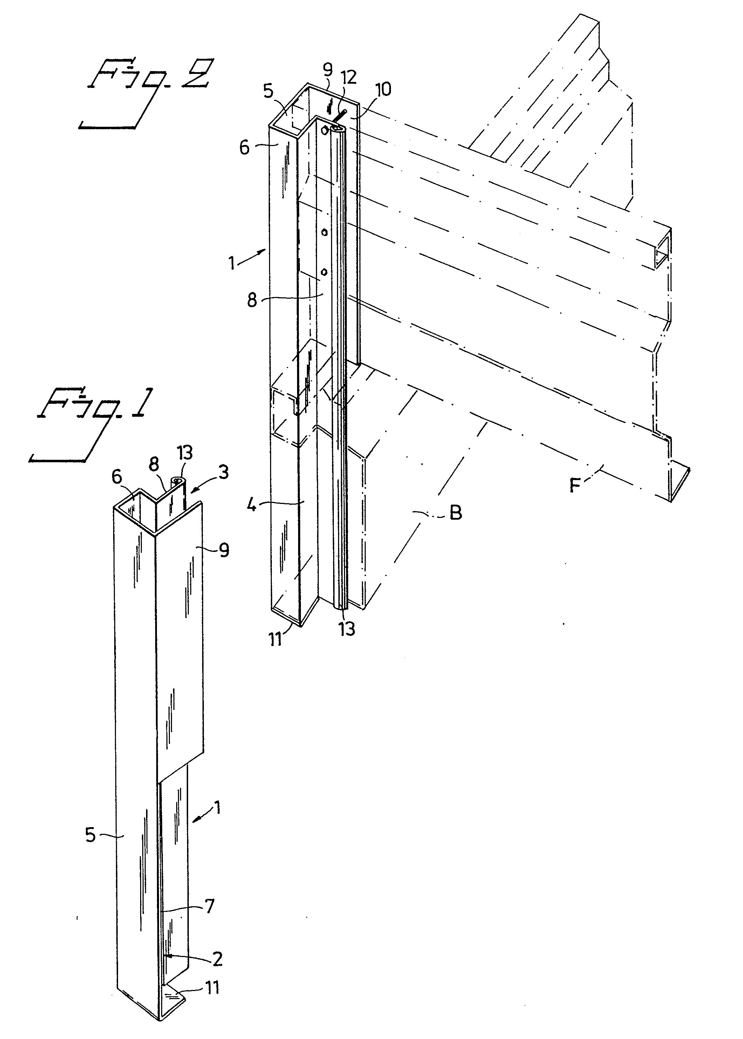

The preferred embodiment depicted in Figure 2 of the corner post 1 in accordance with the invention is formed of folded sheet metal material, such as Aluzinc- treated steel sheet. The corner post 1 is folded to form two rectangular chambers 2, 3, the longitudinal axes of which are mutually at right angles. One chamber 2 is defined by two parallel sides 4, 5 and has a bottom side 6 which is opposite an opening 7 for insertion of a forward or rear crossbeam B. This chamber 2 is situated under the other chamber 3 seen in the height direction of the corner post.

The other, upper chamber 3 is defined by two parallel sides 8, 9 and has a bottom side 5, which is opposite an opening 10 for the insertion of a side board F. Both parallel sides 8, 9 of the upper chamber 3 are at right angles to the parallel sides 4, 5 of the lower chamber 2. In addition, it should be noted that the bottom side 5 of the upper chamber 3 is the same surface of the corner post forming one of the two parallel sides 4, 5 of the lower chamber 2.

Thus, the corner post 1 has three mutually parallel sides, namely those denoted by the numerals 6, 8, 9 which are joined together by two mutually parallel sides 4, 5. The side 9 of the upper chamber 3 extends solely along the part of the corner post 1 corresponding to the height of the side board F. The remaining sides 4, 5, 6, 8 of the post have a length corresponding to the total length of the corner post. One of these sides, here the side 5, may be extended and folded over to form a supporting plane 11 at the foot end of the post 1. Inter alia for the purpose of obtaining better stiffness, the free edge along the sides surrounding the chambers 2, 3 can be folded over as indicated at 13 on the side 8 of the corner post 1. Such folding over 13 of the free, otherwise sharp edges also satisfies the provisions made by authorities in different countries.

In fitting the forward and rear crossbeams B of the trailer and the side boards F in the corner posts 1, the crossbeam B is first inserted into the lower chambers 2 to rest on the supporting plane 11 of the post 1. The side board F is then inserted in the upper chamber 3 such as to rest on the upper side of the already fitted crossbeam B. The crossbeams B as well as the side boards F can be optionally fixed to the corner posts 1, e.g. by bolts 12 as indicated in Figure 2.

Although a preferred embodiment of the corner post in accordance with the invention has been described above in connection with the drawing, it must not be regarded as restricting the invention. The corner post can of course be modified in different ways within the scope of the invention. For example, the chambers can have a shape other than rectangular, the material in the post can be aluminium, etc. The basic inventive idea is to obtain with the aid of two chambers a simple but reliable structure, both from the aspect of erection and that of use. The support plane described above in connection with the figures can be dispensed with, the trailer then being suitably erected in a fixture which forms a substructure for the fitting of the crossbeams into the corner posts. In such a case the crossbeam is fixed to the corner post with a bolted or screwed joint.

## Claims

1. Corner post for a trailer with dismantlable fitting of a forward or rear crossbeam (B) and a side board (F), characterized by two chambers, (2, 3) situated one above the other in the axial direction of the corner post (1), said chambers having openings (7, 10) at right angles to each other so that the forward or rear crossbeam (B) is insertable in the lower chamber (2) while the side board (F) is insertable in the upper chamber (3) such as to rest on the forward or rear crossbeam.

2. Corner post as claimed in claim 1, characterized in that each chamber (2, 3) has a rectangular cross-sectional area which is at right angles to the other so that only a part of the cross-sectional areas of the chambers are superposed each other.

3. Corner post as claimed in claim 1 or 2, characterized in that it is implemented in sheet metal folded to form five sides (4, 5, 6, 8, 9) extending in the axial direction of the post, whereof three (6, 8, 9) of the sides are substantially mutually parallel, and separated by the other two sides (4, 5), which in turn are substantially mutually parallel, in that two (8, 9) of said three parallel sides form one opening (10) extending e entire length of the corner post (1), and in that the other opening (7) is formed in one (9) of the both sides defining said one opening.

4. Corner post as claimed in claim 3, characterized in that the other opening (7) departs from the lower end of the corner post (1) and has an extension, which is only a part of the total length of the corner post, for receiving the forward or rear crossbeam (B).

5. Corner post as claimed in claim 4, characterized in that the other opening (7) is formed by the side (9) being out away for a length corresponding to the length of the opening.

6. Corner post as claimed in any one of claims 2 - 5, characterized in that one (5) of the sides opposing either of both openings (7, 10) is folded over to form a bottom surface (11) in the corner post (1).

7. Corner post as claimed in claim 3, characterized in that one (8) of the two parallel sides defining said one opening (10) and extending along the whole length of the corner post (1) is folded over to form a stiffening edge (13).

*Fig. 2*

*Fig. 1*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-U-8 132 786 (WESTFALIA-WERKE FRANZ KNÖBEL & SÖHNE KG) <br> * page 8, lines 2-26; figure 6 * <br> --- | 1-3 | B 62 D 33/02 |
| A | US-A-2 584 885 (H.E. KRUGER) <br> ----- | | |

TECHNICAL FIELDS
SEARCHED (Int. Cl.4)

B 62 D 33/00

The present search report has been drawn up for all claims

| Place of search | Date of completion of the search | Examiner |
|---|---|---|
| BERLIN | 30-08-1988 | LUDWIG H J |

EPO FORM 1503 03.82 (P0401)